# EUROPÄISCHE PATENTSCHRIFT

(11) **EP 2 419 324 B1**
(45) Veröffentlichungstag und Bekanntmachung des Hinweises auf die Patenterteilung: **16.01.2013**
(21) Anmeldenummer: 10713213.6
(22) Anmeldetag: 09.04.2010
(51) Int. Cl.: B64C 1/06

(54) **HALTEVORRICHTUNG**
HOLDING DEVICE
DISPOSITIF DE RETENUE

(30) Priorität: 14.04.2009 DE 102009017339
(43) Veröffentlichungstag der Anmeldung: 22.02.2012
(73) Patentinhaber: SFS Intec Holding AG, 9435 Heerbrugg (CH)
(72) Erfinder: COSTABEL, Sascha, 75443 Ötisheim (DE)
(86) Internationale Anmeldenummer: PCT/EP2010/054695
(87) Internationale Veröffentlichungsnummer: WO 2010/118987

(56) Entgegenhaltungen:
- EP-A2- 1 215 082
- DE-A1- 4 130 823
- DE-U1-202005 020 824

## Beschreibung

Die Erfindung betrifft eine Haltevorrichtung zum Einsatz während der Montage von einem an einer Tragstruktur wie der eines Flugzeuges vorzugsweise vertikal zu befestigenden Bauteil wie einem Kabinenseitenwandverkleidungsteil.

Im folgenden wird zwar eine solche Haltevorrichtung bei deren Einsatz während der Montage von Kabinenseitenwandverkleidungsteilen an der Tragstruktur eines Flugzeuges beschrieben, eine solche Haltevorrichtung ist jedoch überall dort einsetzbar, wo es darum geht, ein vorzugsweise vertikal verbautes Bauteil an einer Tragstruktur zu befestigen. Das Bauteil wird zwar vorzugsweise vertikal oder senkrecht eingebaut, der Einbau kann jedoch auch abweichend davon erfolgen, also z.B. schräg. Bei der Kabinenentwicklung von neueren Flugzeugtypen wie zum Beispiel dem Airbus A350 wird angestrebt, an dem Flugzeugrumpf zu befestigende Elemente wie Toiletten, Bordküchen, Fluggastsitze, Kabinennetzwerke, Kabinenbeleuchtung und Luftdüsen jeweils als ein komplettes Kabinenmodul zu konzipieren, wobei aber alle Verbindungsstellen als flexible standardisierte Schnittstellen ausgebildet sein sollen und wobei vereinfachte Befestigungskonzepte zum Einsatz kommen sollen, die eine Montage und Demontage ohne die Verwendung von Werkzeugen ermöglichen (vgl. den Aufsatz "Kabinenentwicktung - Neuer Ansatz für die A350 - Cabin Customisation", Zeitschrift One, deutsche Ausgabe, 18. Dezember 2006, S. 23). Eine Haltevorrichtung der eingangs genannten Art ist zum Beispiel bei Flugzeugen während der Montage von Teilen der Kabinenseitenwandverkleidung einsetzbar. Dabei soll gewährleistet sein, dass die standardisierten Schnittstellen Klappergeräusche der miteinander verbundenen Bauteile sicher verhindern. Speziell bei der Befestigung der Kabinenseitenwandverkleidungsteile, den sogenannten Panels, wurden deren Befestigungsteile bisher entweder oben oder unten in eine erste elastomere Halterung eingeschoben und dann in weiteren Aufnahmen befestigt. Dabei wurden die Seitenwandverkleidungsteile üblicherweise in der unteren Endlage mit der Tragstruktur verbunden und der Einfachheit halber dann nicht mehr weiter eingestellt. Das bedeutet, dass die Seitenwandverkleidungsteile meist am unteren Endanschlag angestoßen und so befestigt worden sind, dass die Dämpfung der elastomeren Halterung nicht mehr wirksam war. Diese Situation ließ sich aufgrund der bei der Montage eingesetzten Befestigungspunkte auch nicht verbessern, weil die Anbindung an diese Befestigungspunkte bei dem Einbau jedes Seitenwandverkleidungsteils praktisch blind gefunden werden muss.

Aus dem Dokument EP 1 215 082 A2 ist eine Vorrichtung zum Befestigen eines ersten Teils an einem feststehenden zweiten Teil bekannt. Das erste Teil kann beispielsweise als eine Kunststoffplatte mit Leseleuchten- und Luftduschenöffnungen ausgebildet sein, die mittels einer Befestigungseinrichtung mit dem zweiten Teil lösbar verbunden wird. Die Befestigungseinrichtung besteht aus einem quaderförmigen Grundkörper, der über eine Schraubverbindung an dem zweiten Teil festlegbar ist, sowie einem flexiblen Federelement, das über die Schraubverbindung an dem Grundkörper festlegbar und über ein Scharnier mit dem ersten Teil schwenkbar verbunden ist. Nachdem der Endabschnitt des Federelements auf einer Haltefläche positioniert worden ist, erfolgt das Anbringen der Schraubverbindung. Der so geschaffene Befestigungspunkt ist bei der Montage sichtbar und frei zugänglich, so dass hier keine Probleme bei der Montage der Kunststoffplatte zu erwarten sind.

Aufgabe der Erfindung ist es, eine Haltevorrichtung der eingangs genannten Art zu schaffen, durch die sich ein Bauteil wie ein Kabinenseitenwandteil an einer Tragstruktur wie der eines Flugzeuges einfacher und schneller montieren lässt.

Diese Aufgabe wird erfindungsgemäß mit einer Haltevorrichtung mit den im Anspruch 1 angegebenen Merkmalen gelöst, durch die das zu montierende Bauteil während dessen Montage beweglich vorpositioniert wird, um das Bauteil einfacher und schneller durch seine eigentlichen Befestigungsteile an der Tragstruktur befestigen zu können.

Durch den Einsatz von einer solchen Haltevorrichtung nach der Erfindung lässt sich ein zu befestigendes Bauteil wie ein Kabinenseitenwandverkleidungsteil bei der Montage durch die Abstützung durch das elastisch federnde Element in einer Nominallage halten. Dadurch wird gewährleistet, dass das Bauteil nicht auf Anschlag montiert wird, sondern dass in den eigentlichen Befestigungen desselben vorhandene Dämpfungselemente nicht auf Block montiert werden und die Dämpfungsaufgaben zuverlässig übernommen werden. Die Vorteile sind eine einfachere Montage, eine bessere Einstellbarkeit und eine saubere Entkopplung des Bauteils während und nach der Montage. Im Normalfall werden pro Bauteil zwei Haltevorrichtungen nach der Erfindung eingesetzt, um das Bauteil vorzugsweise in einer vertikalen Lage, das heißt vorzugsweise in einer Mittellage in Z-Richtung zu halten, bis die Anbindung des Bauteils an alle Befestigungspunkte erfolgt ist. Diese Nominallage vorzugsweise in Z-Richtung wird nur zum Einbau des Bauteils benötigt, um die mittlere und die untere Anbindung blind zu finden. Nach dem Einrasten der unteren Verbindung wird das Bauteil an der mittleren Anbindung nach der Justage fest mit der Tragstruktur verbunden. Die Haltevorrichtung dient somit hauptsächlich dazu, das zu befestigende Bauteil in einer gewünschten Nominallage vorzupositionieren. Durch diese Vorpositionierung können auch die übrigen Haltevorrichtungen, die bei der Montage eines Bauteils eingesetzt werden, besser zentriert werden. Diese Nominallage ergibt sich durch die Abstützung des Hakens auf dem elastisch federnden Element der Ringöse oder durch die Abstützung der Ringöse mit dem elastisch federnden Element auf dem Haken, je nachdem, ob sich bei der Montage der Haken vorzugsweise vertikal über der Ringöse oder die Ringöse vorzugsweise vertikal über dem Haken befindet.

Vorteilhafte Ausgestaltungen der Haltevorrichtung nach der Erfindung bilden die Gegenstände der Unteransprüche.

In einer Ausgestaltung der Haltevorrichtung nach der Erfindung ist die Ringöse als ein Gehäuse ausgebildet, welches das elastisch federnde Element enthält und eine Öffnung zum Einführen des Hakens hat. Der Einsatz eines solchen Gehäuses ermöglicht den Einsatz einer Vielfalt von elastisch federnden Elementen.

In einer weiteren Ausgestaltung der Haltevorrichtung nach der Erfindung ist die Öffnung des Gehäuses als ein Langloch ausgebildet. Diese Ausgestaltung ermöglicht eine freie Beweglichkeit des Hakens gegenüber der Ringöse in Richtung quer zur vertikalen oder Z-Achse.

In einer weiteren Ausgestaltung der Haltevorrichtung nach der Erfindung ist die Öffnung zum Einführen des Hakens in einem Führungselement angebracht. Das ermöglicht, die Öffnung zum Einführen des Hakens in die Ringöse je nach der Einbausituation zweckmäßig zu gestalten, zum Beispiel die Öffnung mit einer besonderen Einlaufzone zu versehen, die das Einführen des Hakens erleichtert.

In einer weiteren Ausgestaltung der Haltevorrichtung nach der Erfindung besteht das Führungselement aus einem schwingungsdämpfenden Material. Das erleichtert bei der Montage die Einführung des Hakens in die Ringöse und ergibt im eingebauten Zustand des Bauteils eine erwünschte Dämpfungswirkung, z.B. zum Verhindern von Klappergeräuschen. Darüber hinaus vereinfacht es die Montage und die Einstellbarkeit und sorgt für eine saubere Entkopplung des Bauteils.

In einer weiteren Ausgestaltung der Haltevorrichtung nach der Erfindung ist das elastisch federnde Element eine Schraubenfeder, es könnte sich in einer anderen Ausgestaltung der Erfindung aber auch einfach um einen elastisch verformbaren Füllstoff handeln. In beiden Fällen ergibt sich auf einfache Weise eine elastische Abstützung des Hakens in der Ringöse.

In einer weiteren Ausgestaltung der Haltevorrichtung nach der Erfindung ist zwischen der Öffnung und dem elastisch federnden Element eine bewegliche Druckplatte angeordnet. Diese sorgt für eine gleichmäßige Kraftübertragung zwischen dem Haken und dem elastisch federnden Element der Ringöse.

In einer weiteren Ausgestaltung der Haltevorrichtung nach der Erfindung weist das elastisch federnde Element eine auf das aufzunehmende Bauteilgewicht oder eine auf den von ihm aufzunehmenden Teil des Bauteilgewichtes abgestimmte Federsteife zum Positionieren des Bauteils in einer Nominallage auf, je nachdem, ob das Bauteil mehr oder weniger vertikal zu befestigen ist. Dadurch lässt sich sicherstellen, dass während der Montage das Bauteil nicht einfach in unterer Position befestigt wird. Außerdem können durch diese Vorpositionierung in Nominallage die übrigen Befestigungseinrichtungen des Bauteils besser zentriert werden.

In einer zur Zeit besonders bevorzugten Ausgestaltung der Haltevorrichtung nach der Erfindung ist die Federsteife so abgestimmt, dass der an dem Bauteil befestigte Haken in einer Achse, in der die Ringöse und der darin eingeführte Haken liegen, vorzugsweise die Z-Achse, eine Beweglichkeit von +/-5mm um die Nominallage hat. Diese Beweglichkeit um die Nominallage ist ausreichend, um sicherzustellen, dass das Bauteil nicht während der Montage immer in der unteren Position befestigt wird. Dadurch wird außerdem noch sicherer gewährleistet, dass die Dämpfungselemente nicht auf Block montiert werden und die Dämpfungsaufgaben zuverlässig übernommen werden. Der Beweglichkeitsbereich kann bei Bedarf größer oder kleiner als +/- 5 mm gewählt werden.

In einer weiteren Ausgestaltung der Haltevorrichtung nach der Erfindung weisen der Haken und die Ringöse zu ihrer Befestigung an der Tragstruktur oder dem Bauteil jeweils eine Befestigungsplatte auf. So lassen sich der Haken und die Ringöse auf einfache Weise an geeigneter Stelle an der Tragstruktur bzw. dem Bauteil befestigen.

Ausführungsbeispiele der Erfindung werden im Folgenden unter Bezugnahme auf die Zeichnungen näher beschrieben. Es zeigt
- Fig. 1: eine bevorzugte Ausführungsform einer Haltevorrichtung nach der Erfindung in einer Ansicht von vorn,
- Fig. 2: die Haltevorrichtung in einer Längsschnittansicht nach der Linie II-II in Fig. 1.
- Fig. 3: die Haltevorrichtung nach den Fig. 1 und 2 in einer perspektivischen Darstellung,
- Fig. 4: die Haltevorrichtung nach Fig. 3 in einer auseinandergezogenen Darstellung,
- Fig. 5: die Haltevorrichtung nach den Fig. 1 - 4 in einer Rückansicht,
- Fig. 6: in Draufsicht die Befestigung der Haltevorrichtung nach Fig. 5 an einer Tragstruktur und an einem Bauteil und
- Fig. 7: die Haltevorrichtung nach Fig. 6 in einer Seitenansicht.

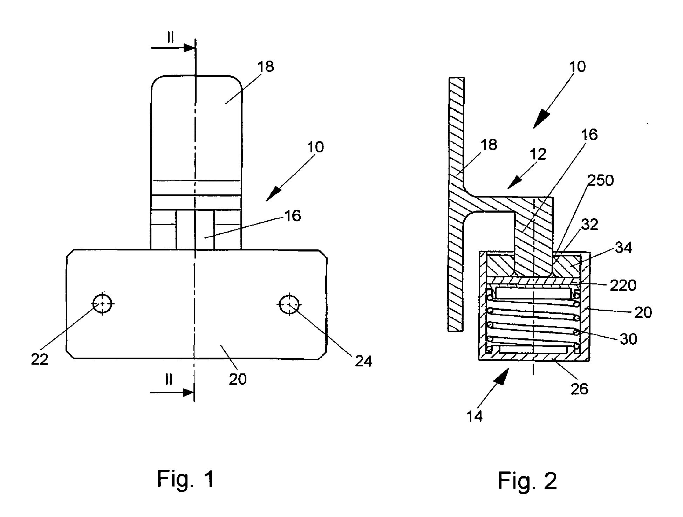

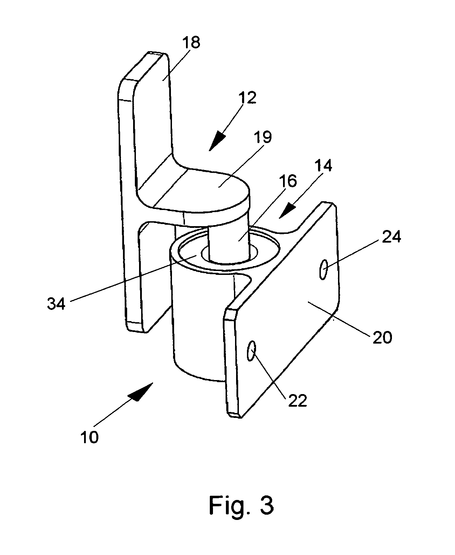

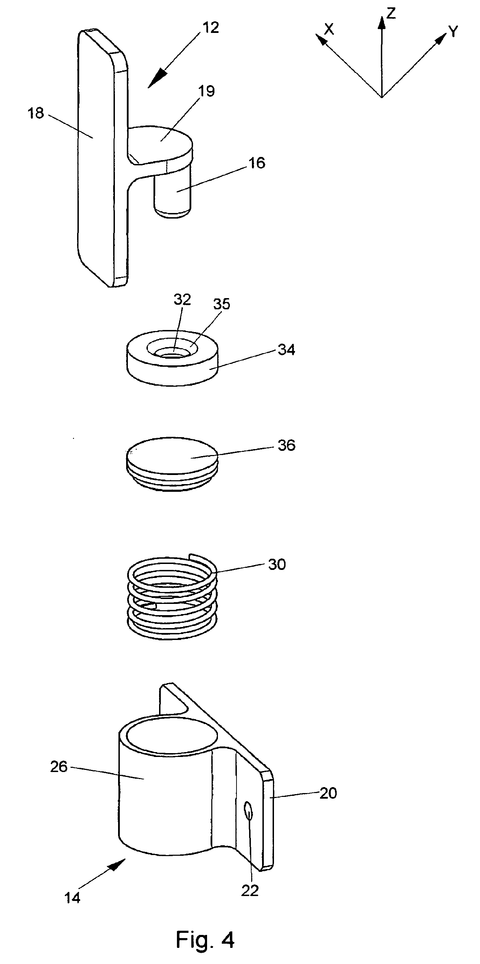

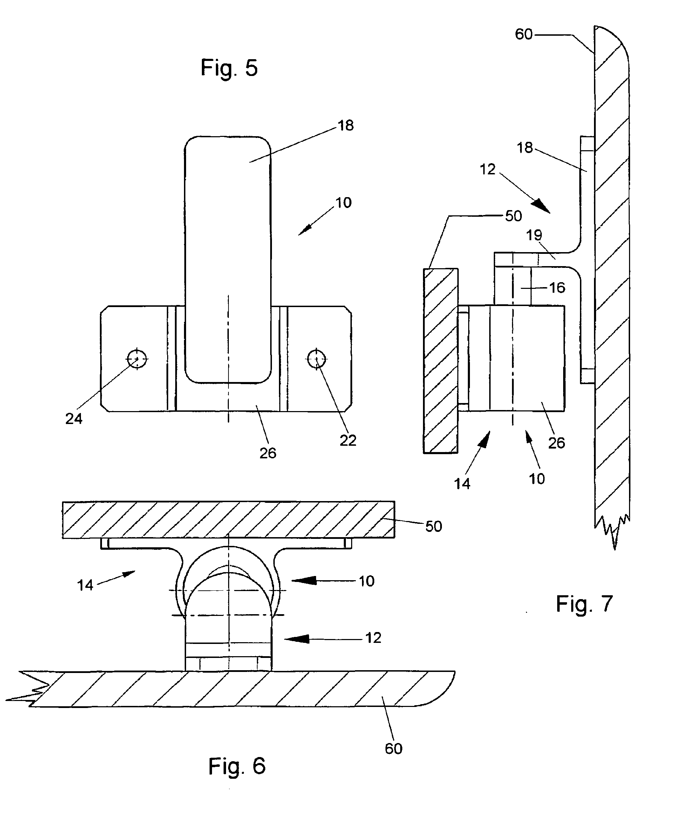

In den Fig. 1-7, auf die nun Bezug genommen wird, ist eine Haltevorrichtung nach der Erfindung insgesamt mit 10 bezeichnet. Gemäß der Darstellung in den Fig. 6 und 7 wird die Haltevorrichtung 10 bei der Montage von einem vertikal an einer Tragstruktur 50, bei der es sich um die Tragstruktur eines Flugzeuges handeln kann, zu befestigenden Bauteil 60, bei dem es sich um ein Kabinenseitenwandverkleidungsteil eines Flugzeuges handeln kann, eingesetzt. Der Einbau des Bauteils 60 in einer von der Vertikallage abweichenden Position ist zwar möglich, hier wird jedoch nur der bevorzugte Einbau in der Vertikallage beschrieben. Gemäß der Darstellung in den Fig. 3 und 4 umfasst die Haltevorrichtung 10 einen insgesamt mit 12 bezeichneten Haken und eine insgesamt mit 14 bezeichnete Ringöse, die den Haken 12, genauer gesagt den als einen Zapfen 16 ausgebildeten freien Endteil des Hakens 12 aufnimmt. Der Haken 12 besteht, wie dargestellt, aus der Befestigungsplatte 18, an der eine Konsole 19 angeformt ist, welche den Zapfen 16 trägt, wie es in Fig. 4 gezeigt ist. Der Haken 12 und die Ringöse 14 weisen zu ihrer Befestigung an der Tragstruktur 50 oder dem Bauteil 60 jeweils eine Befestigungsplatte 18 bzw. 20 auf. Die Befestigungsplatten 18 und 20 weisen in dem dargestellten Ausführungsbeispiel jeweils zwei Befestigungslöcher auf, wobei aber nur die Befestigungslöcher 22 und 24 der Befestigungsplatte 20 der Ringöse 14 in den Zeichnungen dargestellt sind.

Die Ringöse 14 ist gemäß Fig. 4 als ein an der Befestigungsplatte 20 angeformtes zylindrisches Gehäuse 26 ausgebildet, das auf der Einführseite des Hakens 12 offen und auf der entgegengesetzten Seite durch einen Boden verschlossen ist. In dem Gehäuse 26 ist ein elastisch federndes Element 30 angeordnet, bei dem es sich in dem dargestellten Ausführungsbeispiel um eine Schraubenfeder handelt. Alternativ könnte es sich auch um einen elastisch verformbaren Füllstoff handeln. Auf der Einführseite des Hakens 12 hat das Gehäuse 26 eine Öffnung 32. Die Öffnung 32 ist in einem ringförmigen Führungselement 34 gebildet. Das Führungselement 34 hat eine Einlaufzone 35, die das Einführen des Zapfens 16 in die Öffnung 32 erleichtert. Das Führungselement 34 besteht aus einem schwingungsdämpfenden Material und bildet somit in einer durch die X- und Y-Achse (Fig. 4) aufgespannten Ebene einen Schwingungsdämpfer. Das Führungselement 34 stützt sich in Richtung zu der Einführseite des Hakens 12 an einer in den Figuren nicht dargestellten Ringschulter ab. Zwischen dem Führungselement 34 und dem elastisch federnden Element 30 ist eine axial bewegliche Druckplatte 36 angeordnet. Über die Druckplatte 36 stützt sich der Haken 12 auf dem elastisch federnden Element 30 ab.

Das elastisch federnde Element 30 hat eine auf das aufzunehmende Bauteilgewicht abgestimmte Federsteife zum Positionieren des Bauteils 60 in einer Nominallage. Dabei ist die Federsteife so abgestimmt, dass der an dem Bauteil 60 befestigte Haken 12 in einer Achse, in der die Ringöse 14, genauer gesagt deren Gehäuse 26 und der darin eingeführte Haken 12 liegen, in dem hier dargestellten und beschriebenen Ausführungsbeispiel eine Beweglichkeit von +/- 5 mm um die Nominallage hat. Gemäß dem in Fig. 4 angedeuteten Koordinatensystem handelt es sich bei der vorgenannten Achse um die Z-Achse. In Fig. 2 ist nicht die Nominallage gezeigt, sondern die Lage, die Z = + 5 mm entspricht. In der Nominallage würde sich die Druckplatte 36 in Fig. 2 in einem Abstand von 5 mm unterhalb des Führungselements 34 befinden. In der Lage Z = - 5 mm würde sich die Druckplatte 36 in Fig. 2 in einem Abstand von 10 mm unterhalb des Führungselements 34 befinden. Wenn sich das Bauteil 60 während der Montage in der Nominallage befindet, ist es aufgrund des elastisch federnden Elements 30 und des aus Dämpfungsmaterial bestehenden Führungselements 34 in der X-, Y- und Z-Achse stoßdämpfend gelagert. Die Öffnung 32 des Gehäuses 26 kann auch als ein Langloch ausgebildet sein. Das erlaubt eine weitere Beweglichkeit des Bauteils 60 in Richtung der X-Achse. Darüber hinaus ist beim Einbau des Bauteils 60 dessen Verschwenken möglich, und zwar in einem Winkel, der mehr als 20° betragen kann.

In dem hier dargestellten und beschrieben Ausführungsbeispiel ist die Ringöse 14 an der Tragstruktur 50 befestigt, und zwar so, dass die Öffnung 32 nach oben weist. Es ist aber auch möglich, die Ringöse 14 statt an der Tragstruktur 50 an dem Bauteil 60 zu befestigen, und zwar so, dass die Öffnung 32 nach unten weist. Der Haken 12 würde in diesem Fall an der Tragstruktur 50 befestigt, und zwar so, dass dessen Zapfen 16 nach oben weist.

### Bezugszeichenliste

- 10: Haltevorrichtung
- 12: Haken
- 14: Ringöse
- 16: Zapfen
- 18: Befestigungsplatte
- 19: Konsole
- 20: Befestigungsplatte
- 22: Befestigungsloch
- 24: Befestigungsloch
- 26: Gehäuse
- 30: elastisch federndes Element
- 32: Öffnung
- 34: Führungselement
- 35: Einlaufzone
- 36: Druckplatte
- 50: Tragstruktur
- 60: Bauteil

## Patentansprüche

1. Haltevorrichtung zum Einsatz während der Montage von einem an einer Tragstruktur wie der eines Flugzeuges vorzugsweise vertikal zu befestigenden Bauteil (60) wie einem Kabinenseitenwandverkleidungsteil, mit einem Haken (12) und einer den Haken (12) aufnehmenden Ringöse (14), die an der Tragstruktur (50) bzw. dem Bauteil (60) befestigbar ausgebildet sind,
wobei die Ringöse (14) wenigstens ein elastisch federndes Element (30) zur beweglichen gegenseitigen Abstützung von Ringöse (14) und Haken (12) aufweist.

2. Haltevorrichtung nach Anspruch 1, **dadurch gekennzeichnet, dass** die Ringöse (14) als ein Gehäuse (26) ausgebildet ist, welches das elastisch federnde Element (30) enthält und eine Öffnung (32) zum Einführen des Hakens (12) hat.

3. Haltevorrichtung nach Anspruch 2, **dadurch gekennzeichnet, dass** die Öffnung (32) des Gehäuses (26) als ein Langloch ausgebildet ist.

4. Haltevorrichtung nach Anspruch 2 oder 3, **dadurch gekennzeichnet, dass** die Öffnung (32) zum Einführen des Hakens (12) in einem Führungselement (34) angebracht ist.

5. Haltevorrichtung nach Anspruch 4, **dadurch gekennzeichnet, dass** das Führungselement (34) aus einem schwingungsdämpfenden Material besteht.

6. Haltevorrichtung nach einem der Ansprüche 2 bis 5, **dadurch gekennzeichnet, dass** das elastisch federnde Element (30) eine Schraubenfeder ist.

7. Haltevorrichtung nach einem der Ansprüche 2 bis 5, **dadurch gekennzeichnet, dass** das elastisch federnde Element (30) ein elastisch verformbarer Füllstoff ist.

8. Haltevorrichtung nach einem der Ansprüche 2 bis 7, **dadurch gekennzeichnet, dass** zwischen der Öffnung (32) und dem elastisch federnden Element (30) eine bewegliche Druckplatte (36) angeordnet ist.

9. Haltevorrichtung nach einem der vorhergehenden Ansprüche, **dadurch gekennzeichnet, dass** das elastisch federnde Element (30) eine auf das aufzunehmende Bauteilgewicht abgestimmte Federsteife zum Positionieren des Bauteils (60) in einer Nominallage aufweist.

10. Haltevorrichtung nach Anspruch 9, **dadurch gekennzeichnet, dass** die Federsteife so abgestimmt ist, dass der an dem Bauteil (60) befestigte Haken (12) in einer Achse (Z), in der die Ringöse (14) und der darin eingeführte Haken (12) liegen, eine Beweglichkeit von +/- 5 mm um die Nominallage hat.

11. Haltevorrichtung nach einem der vorhergehenden Ansprüche, **dadurch gekennzeichnet, dass** der Haken (12) und die Ringöse (14) zu ihrer Befestigung an der Tragstruktur (50) oder dem Bauteil (60) jeweils eine Befestigungsplatte (18, 20) aufweisen.

## Claims

1. A retaining device for use during the installation of a component (60), such as a cabin side wall panelling member, which is to be fastened, preferably vertically, to a support structure, such as that of an aircraft, with a hook (12) and an ring eyelet (14) accommodating the hook (12), which are designed so that they can be fastened to the support structure (50) or to the component (60), wherein the ring eyelet (14) has at least one elastically resilient element (30) for the movable mutual support of the ring eyelet (14) and the hook (12).

2. A retaining device according to Claim 1, **characterised in that** the ring eyelet (14) is in the form of a housing (26) which contains the resilient element (30) and has an opening (32) for insertion of the hook (12).

3. A retaining device according to Claim 2, **characterised in that** the opening (32) of the housing (26) is in the form of an oblong hole.

4. A retaining device according to Claim 2 or 3, **characterised in that** the opening (32) for insertion of the hook (12) is provided in a guide element (34).

5. A retaining device according to Claim 4, **characterised in that** the guide element (34) consists of a vibration-damping material.

6. A retaining device according to any one of Claims 2 to 5, **characterised in that** the elastically resilient element (30) is a helical spring.

7. A retaining device according to any one of Claims 2 to 5, **characterised in that** the elastically resilient element (30) is an elastically deformable filling material.

8. A retaining device according to any one of Claims 2 to 7, **characterised in that** a movable pressure plate (36) is disposed between the opening (32) and the elastically resilient element (30).

9. A retaining device according to any one of the preceding Claims, **characterised in that** the elastically resilient element (30) has a spring constant, which is adjusted to the weight of the component to be accommodated, for positioning the component (60) in a nominal position.

10. A retaining device according to Claim 9, **characterised in that** the spring constant is adjusted so that the hook (12) fastened to the component (60) has a degree of mobility of +/- 5 mm about the nominal position on an axis (Z) on which the ring eyelet (14) and the hook (12) inserted therein lie.

11. A retaining device according to any one of any one of the preceding Claims, **characterised in that** the hook (12) and the ring eyelet (14) have a respective fastening plate (18,20) for their fastening to the support structure (50) or the component (60).

## Revendications

1. Dispositif de retenue destiné à être mis en oeuvre pendant le montage d'un élément (60) devant de préférence être fixé verticalement sur une structure support (50) telle qu'un revêtement de paroi latérale de cabine d'un avion, comportant un crochet (12), et un oeillet annulaire (14) recevant ce crochet (12) qui sont réalisés de façon à pouvoir être fixés sur la structure support (50) ou l'élément (60),
l'oeillet annulaire (14) comportant au moins un élément élastiquement déformable (30) pour permettre à l'oeillet annulaire (14) et au crochet (12) de s'appuyer tout en pouvant se déplacer.

2. Dispositif de retenue conforme à la revendication 1,
**caractérisé en ce que**
l'oeillet annulaire (14) est réalisé sous la forme d'un boîtier (26) renfermant l'élément élastiquement déformable (30) et comprend une ouverture (32) d'introduction du crochet (12).

3. Dispositif de retenue conforme à la revendication 2,
**caractérisé en ce que**
l'ouverture (32) du boîtier (26) est réalisée sous la forme d'un trou oblong.

4. Dispositif de retenue conforme à la revendication 2 ou 3,
**caractérisé en ce que**
l'ouverture (32) de réception du crochet (12) est située dans un élément de guidage (34).

5. Dispositif de retenue conforme à la revendication 4,
**caractérisé en ce que**
l'élément de guidage (34) est réalisé en un matériau amortissant les vibrations.

6. Dispositif de retenue conforme à l'une des revendications 2 à 5,
**caractérisé en ce que**
l'élément élastiquement déformable (30) est un ressort cylindrique.

7. Dispositif de retenue conforme à l'une des revendications 2 à 5,
**caractérisé en ce que**
l'élément élastiquement déformable (30) est une garniture élastiquement déformable.

8. Dispositif de retenue conforme à l'une des revendications 2 à 7,
**caractérisé en ce qu'**
une plaque de compression mobile (36) est montée entre l'ouverture (32) et l'élément élastiquement déformable (30).

9. Dispositif de retenue conforme à l'une des revendications précédentes,
**caractérisé en ce que**
l'élément élastiquement déformable (30) présente une raideur élastique adaptée au poids de l'élément à recevoir pour positionner cet élément (60) dans une position nominale.

10. Dispositif de retenue conforme à la revendication 9,
**caractérisé en ce que**
la raideur élastique est adaptée de sorte que le crochet (12) fixé sur l'élément (60) ait une liberté de mouvement de +/- 5 mm autour de la position nominale dans un axe Z sur lequel sont situés l'oeillet annulaire (14) et le crochet (12) introduit dans celui-ci.

11. Dispositif de retenue conforme à l'une des revendications précédentes,
**caractérisé en ce que**
le crochet (12) et l'oeillet annulaire (14) comportent respectivement une plaque de fixation (18, 20) pour permettre leur fixation sur la structure support (50) ou sur l'élément (60).
